(19) Europäisches Patentamt
European Patent Office
Office européen des brevets

(11) Veröffentlichungsnummer : **0 057 418**
**B1**

(12) # EUROPÄISCHE PATENTSCHRIFT

(45) Veröffentlichungstag der Patentschrift : **02.05.84**

(51) Int. Cl.³ : **C 09 B 67/36**, D 06 P 1/12

(21) Anmeldenummer : **82100544.4**

(22) Anmeldetag : **27.01.82**

(54) **Präparationen von Nitro-anilinen.**

(30) Priorität : **04.02.81 DE 3103712**

(43) Veröffentlichungstag der Anmeldung : **11.08.82 Patentblatt 82/32**

(45) Bekanntmachung des Hinweises auf die Patenterteilung : **02.05.84 Patentblatt 84/18**

(84) Benannte Vertragsstaaten : **CH DE FR IT LI**

(56) Entgegenhaltungen :
**DE-A- 2 346 502**
**DE-A- 2 640 138**
**DE-A- 2 737 113**
**DE-A- 2 749 635**
**DE-B- 1 054 061**
**DE-C- 896 040**

(73) Patentinhaber : **HOECHST AKTIENGESELLSCHAFT**
**Postfach 80 03 20**
**D-6230 Frankfurt am Main 80 (DE)**

(72) Erfinder : **Hertel, Hasso, Dr.**
**Brunnenweg 10**
**D-6052 Mühlheim (DE)**

EP 0 057 418 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Präparationen von Nitro-anilinen

Die Erfindung liegt auf dem technischen Gebiet von wasserunlöslichen oder praktisch wasserunlöslichen Nitro-anilin-Verbindungen, die als Diazokomponenten zur Herstellung von wasserunlöslichen Azofarbstoffen auf der Faser dienen können.

Halogenhaltige Anilinverbindungen, die keine Sulfonsäure- oder Carbonsäuregruppen enthalten, werden beispielsweise als Diazokomponenten in der Eisfarbenfärberei zur Herstellung von wasserunlöslichen Azofarbstoffen auf der Faser verwendet. Setzt man sie in Form ihrer freien Basen oder in Form ihrer Salze von starken Säuren, wie beispielsweise in Form ihrer Hydrochloride oder Sulfate, in die Eisfarbenfärberei ein und führt deren Diazotierung unter den in der Färbepraxis üblichen Bedingungen durch, so erhält man sehr trübe Diazoniumsalzlösungen, die viel Rückstand enthalten und die beim Färben erhebliche Schwierigkeiten bereiten können. In der DE-A 26 40 138 werden nun Präparationen von solchen halogenhaltigen Anilinverbindungen mit einem Schmelzpunkt von unter 90 °C beschrieben, die als Lösemittel ein oxethyliertes Ricinusöl mit einem Gehalt von 25 bis 60 Mol Ethylenoxid und gegebenenfalls einen Di-, Tri- oder Tetraethylenglykol-monoalkylether enthalten und mit denen auf einfache Weise rückstandsfreie, für die Eisfarbenfärberei gut verwendbare Diazoniumsalzlösungen hergestellt werden können.

Von solchen Präparationen wird eine gute Lagerfähigkeit verlangt. Diese besteht für die oben erwähnten Präparationen bei höheren Temperaturen, wie unter Tropenbedingungen, und in der Regel auch bei tiefen Temperaturen, etwa bei oder kurz unter 0 °C. Beispielsweise besitzt eine Präparation aus 60 Gew.-% 4-Chlor-2-amino-toluol, 25 Gew.-% oxethyliertem Ricinusöl und 15 Gew.-% Diethylenglykolmonomethylether eine Kristallisationstemperatur von − 7 °C und eine Präparation aus 60 Gew.-% 5-Chlor-2-amino-toluol, 25 Gew.-% oxethyliertem Ricinusöl und 15 Gew.-% Diethylenglykolmonomethylether eine Kristallisationstemperatur von 0 °C. Unter Kristallisationstemperatur ist hier diejenige Temperatur zu verstehen, bei der beim langsamen Abkühlen der Präparationen die ersten Kristalle erscheinen. Da die Kristallbildung in solchen Lösungen aber sehr stark gehemmt ist, geht man zur Bestimmung der Kristallisationstemperatur von teilkristallisierten Präparationen aus und erwärmt diese langsam. Diejenige Temperatur, bei der die letzten Kristalle verschwinden, wird als die Kristallisationstemperatur definiert. Für die praktische Verwendung der Präparationen muß diese Kristallisationstemperatur genügend niedrig sein, damit es auch in ungeheizten Lagerräumen nicht zur Auskristallisation des Amins kommt.

Versucht man nun, in den Präparationen der DE-A 26 40 138 das halogenhaltige Anilin durch eine Nitro-anilin-Verbindung zu ersetzen, so erhält man Präparationen mit wesentlich höheren Kristallisationstemperaturen. Stellt man beispielsweise Präparationen her, die in den Beispielen 7 bis 11 der DE-A 26 40 138 beschrieben sind, ersetzt jedoch die dort verwendeten Chlor-anilin-Verbindungen durch entsprechende Nitro-anilin-Verbindungen, so erhält man Präparationen, die bei Raumtemperatur weitgehend durchkristallisiert sind. Beispielsweise besitzt eine Präparation aus 40 Gew.-% 2-Nitro-anilin, 30 Gew.-% eines oxethylierten Ricinusöls und 30 Gew.-% Diethylenglykol-monomethylether eine Kristallisationstemperatur von + 19 °C ; diese Präparation ist somit für eine praktische Verwendung in keiner Weise geeignet.

Mit der vorliegenden Erfindung wurden nun Präparationen von Nitro-anilin-Verbindungen, die keine Sulfonsäure- und/oder Carbonsäuregruppen enthalten und einen Schmelzpunkt von unter 140 °C besitzen, gefunden, die diese Nachteile nicht aufweisen.

Diese erfindungsgemäßen Präparationen sind dadurch gekennzeichnet, daß sie

a) 20-70 Gew.-%, vorzugsweise 35-60 Gew.-%, solch einer Nitro-anilin-Verbindung,

b) 5-80 Gew.-%, vorzugsweise 5-40, insbesondere 10-30 Gew.-%, eines oxethylierten Ricinusöls mit einem Gehalt von 25-60 Mol, vorzugsweise 30-45 Mol, Ethylenoxid und

c) 5-65 Gew.-%, vorzugsweise 20-50 Gew.-%, N-Methylpyrrolidon

enthalten.

Bevorzugt sind insbesondere solche der oben definierten Nitro-anilin-Verbindungen, die in üblicher und bekannter Weise Verwendung als Diazokomponenten in der Eisfarbenfärbung finden oder finden können.

Die erfindungsgemäßen Präparationen sind einfach, rasch und rückstandsfrei diazotierbar ; sie sind deshalb in hervorragender Weise geeignet, in der Eisfarbenfärberei für die Erzeugung von wasserunlöslichen Azofarbstoffen auf der Faser eingesetzt zu werden. Ihre Kristallisationstemperaturen liegen so niedrig, daß die Nitro-anilin-Verbindungen auch bei Lagertemperaturen, wie sie üblicherweise im Winter in ungeheizten Lagerräumen vorkommen, nicht auskristallisieren.

Die erfindungsgemäßen Präparationen können gegebenenfalls in geringen Mengen (von bis zu etwa 5 Gew.-%) noch weitere Stoffe enthalten, wie z. B. Alkanole von 1 bis 20 C-Atomen, Ethylenglykol, Polyethylenglykole mit 2 bis 25 Ethylenoxid-einheiten, Propylenglykol, Polypropylenglykole mit 2 bis 10 Propylenoxideinheiten, die Mono- und Dialkylether dieser Verbindungen, wobei die Alkylreste 1 bis 4 C-Atome enthalten, Wasser und andere am Stickstoff substituierte Pyrrolidone, wie N-Ethyl-, N-Propyl-, N-Isopropyl-, N-Butyl-, N-Vinyl- und N-Polyvinyl-pyrrolidon.

Die erfindungsgemäßen Präparationen stellen viskose Lösungen dar, die leicht und sicher zu handhaben sind. Vergleicht man beispielsweise die Diazotierung einer im Handel üblichen Pulvermarke,

die 5-Nitro-2-methyl-anilin enthält, mit der Diazotierung einer erfindungsgemäßen flüssigen Präparation von 5-Nitro-2-methyl-anilin, so zeigt sich für die erfindungsgemäßen Präparationen bei der Diazotierung eine Zeitersparnis von etwa 95 % (vgl. das nachfolgende Ausführungsbeispiel 3). Die mit der flüssigen Präparation erhaltene Diazoniumsalzlösung ist auch nach längerem Stehen noch klar durchsichtig und völlig rückstandsfrei, während die Diazoniumsalzlösung aus der Pulvermarke trübe ist und eine beträchtliche Menge unlöslicher Substanzen enthält. Für die Diazotierung der erfindungsgemäßen flüssigen Präparation ist, anders als für die Pulvermarke, außerdem kein Eiszusatz erforderlich, was einen wesentlichen Vorteil bedeutet.

Die in den erfindungsgemäßen Präparationen enthaltenen Nitro-anilin-Verbindungen sind insbesondere die unsubstituierten Nitro-aniline und die durch einen oder zwei Substituenten aus der Gruppe Halogen, wie Chlor und Fluor, Alkyl von 1 bis 4 C-Atomen, wie Methyl und Ethyl, Alkoxy von 1 bis 4 C-Atomen, wie Methoxy und Ethoxy, und Trifluormethyl substituierten Nitro-aniline, so beispielsweise die durch Chlor substituierten Nitro-aniline, die durch Methyl oder Ethyl substituierten Nitro-aniline, die durch Methoxy oder Ethoxy substituierten Nitro-aniline, die durch Chlor und Methyl substituierten Nitro-aniline oder die durch Trifluormethyl substituierten Nitro-aniline. Hervorzuheben sind insbesondere diejenigen Nitro-anilin-Verbindungen, die der Formel (1)

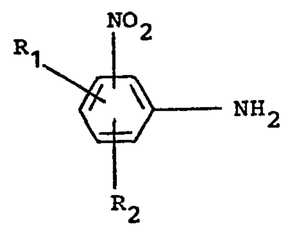

(1)

entsprechen, in welcher $R_1$ ein Wasserstoffatom, ein Chlor- oder Fluoratom, eine Trifluormethyl-, eine Methyl-, Ethyl-, Methoxy- oder Ethoxygruppe bedeutet und $R_2$ für ein Wasserstoffatom, ein Chloratom, eine Methyl-, Ethyl-, Methoxy- oder Ethoxygruppe steht, wobei, wie oben definiert, der Schmelzpunkt dieser Nitro-aniline unter 140 °C sein soll.

Von den einzelnen Nitro-anilin-Verbindungen sind insbesondere das 2-Nitro-anilin (Colour Index C.I.-Nr. 37025), 3-Nitro-anilin (C.I. 37030), 4-Chlor-2-nitro-anilin (C.I. 37040), 4-Nitro-2-methyl-anilin (C.I. 37105) und 5-Nitro-2-methoxy-anilin (C.I. 37130) zu nennen.

Hervorgehoben werden können insbesondere solche erfindungsgemäßen Präparationen, die 30-50 Gew.-% 3-Nitro-anilin oder 5-Nitro-2-methyl-anilin oder 5-Nitro-2-methoxy-anilin, 5-40 Gew.-%,insbesondere 5-20 Gew.-%, des oben erwähnten oxethylierten Ricinusöls und 30-65 Gew.-%, insbesondere 40-50 Gew.-%, N-Methyl-pyrrolidon enthalten.

Das oxethylierte Ricinusöl, das in den erfindungsgemäßen Präparationen enthalten ist, kann beispielsweise gemäß der DE-C 694 178 hergestellt werden.

Die erfindungsgemäßen Präparationen lassen sich beispielsweise durch Verrühren der einzelnen Komponenten, gegebenenfalls unter leichtem Erwärmen, herstellen.

Die Präparationen sind bevorzugt in der Eisfarbenfärberei zur Erzeugung von wasserunlöslichen Azofarbstoffen auf der Faser anwendbar, in welcher die in diesen Präparationen gelöste Diazokomponente durch Diazotierung in das Diazoniumsalz übergeführt wird. Die Erfindung betrifft demnach auch die Verwendung der erfindungsgemäßen Präparationen in der Eisfarbenfärberei. Dies kann beispielsweise so erfolgen, daß man die Präparationen in verdünnte Salzsäure einrührt und sodann unter Rühren rasch eine wäßrige Natriumnitritlösung zugibt. Die Diazotierung ist in sehr kurzer Zeit, meist innerhalb einiger Sekunden, beendet. Die verdünnte Salzsäure kann eine Temperatur bis zu etwa 25 °C besitzen. Zu ihrer Bereitung kann deshalb meist das vorhandene Leitungswasser, ohne Kühlung oder Eiszusatz, verwendet werden.

Man kann aber auch zuerst die wäßrige Natriumnitritlösung in die vorgelegte verdünnte Salzsäure eintragen und sodann die Präparation des Nitroanilins nachsetzen. Zweckmäßigerweise wählt man bei dieser Durchführungsart die Diazotierungstemperatur nicht oberhalb 15 °C.

Das Rühren bei der Herstellung der Diazoniumsalzlösung erfolgt üblicherweise durch einen Rührmotor. Es ist aber auch wegen der sehr guten Diazotierbarkeit der erfindungsgemäßen Präparationen möglich, falls erforderlich, diese in Mengen von bis zu 5 kg unter Rühren von Hand mittels eines Holzpaddels zu diazotieren.

Die mit den erfindungsgemäßen Präparationen erhältlichen klaren, rückstandsfreien Diazoniumsalzlösungen erlauben es, in der Eisfarbenfärberei Färbungen auf der Faser zu erzeugen, die klare Farbtöne besitzen und sich durch sehr gute Echtheiten, wie insbesondere eine ausgezeichnete Reibechtheit, hervorheben.

In der chemischen Industrie werden Diazotierungen in speziellen, geschlossenen Reaktionsgefäßen vorgenommen, die mit einem Kühlmantel versehen sind und mit einem wirksamen Rührwerk, einer Dosiereinrichtung für Natriumnitritlösung und einer Absaugeeinrichtung für entstehende nitrose Gase ausgestattet sind. Färbereien und Druckereien stellen hingegen ihre für die Eisfarbentechnik benötigten Diazoniumsalzlösungen traditionsgemäß in offenen, einfachen Gefäßen (Eimer, Wannen) ohne die

Möglichkeit einer langsamen, kontinuierlichen Nitritzugabe her. Die kühlung kann somit nur durch Zugabe von Stückeis erfolgen und die Bildung von nitrosen Gasen muß ausgeschlossen werden. Unter solchen Bedingungen lassen sich erforderliche klare rückstandsfreie Diazoniumsalzlösungen nur mittels spezieller Präparationen herstellen. Solche Präparationen wurden für die Nitro-aniline nunmehr mit der vorliegenden Erfindung gefunden.

Die nachstehenden Beispiele dienen zur Erläuterung der Erfindung. Die Teile sind Gewichtsteile, die Prozentangaben beziehen sich auf Gewichtsprozente, sofern nicht anders vermerkt.

Beispiel 1

a) 400 Teile 3-Nitro-anilin, 100 Teile eines Umsetzungsproduktes aus 1 Mol Ricinusöl und 36 Mol Ethylenoxid und 500 Teile N-Methylpyrrolidon werden miteinander vermischt. Es entsteht eine gelbe, klare Flüssigkeit mit einer Kristallisationstemperatur von − 3 °C.

b) Diese erfindungsgemäße Präparation läßt sich gut nach folgender Methode diazotieren :

100 Teile dieser Präparation werden in ein Gemisch aus 900 Teilen Wasser von etwa 15 °C und 100 Teilen einer 32 %igen Salzsäure eingetragen und darin verrührt. Eine Lösung von 23 Teilen Natriumnitrit in etwa 40 Teilen Wasser wird unter Rühren sehr schnell zugegossen. Die Diazotierung ist in einigen Sekunden beendet ; es resultiert eine gut haltbare, rückstandsfreie Diazoniumsalzlösung.

Zur Herstellung einer Scharlachfärbung auf Baumwollgarn werden 250 Teile dieser Diazoniumsalzlösung mit 4 750 Teilen Wasser verdünnt ; 40 Teile kristallines Natriumacetat und 6 Teile einer 60 %igen wäßrigen Essigsäure werden darin gelöst. Diese so hergestellte Lösung wird als Entwicklungsflotte in der folgenden Färberezeptur eingesetzt :

Eine vorgenetzte Kreuzspule mit 500 Teilen Baumwollgarn wird in einem Färbeapparat zunächst mit 5 000 Teilen einer Färbeflotte von etwa 20 °C behandelt, die 18 Teile 2-Hydroxy-naphthalin-3-carbonsäure-4′-chlorphenylamid, 50 Teile einer 32 %igen wäßrigen Natronlauge, 10 Teile einer wäßrigen, 30 %igen Formaldehydlösung und 12,5 Teile eines handelsüblichen Fettsäure-Eiweißabbauprodukt-Kondensats enthält. Nach 30 Minuten wird diese Flotte abgelassen und die Spule mit einer Lösung von 100 Teilen Natriumchlorid und 7 Teilen einer 32 %igen wäßrigen Natronlauge in 5 000 Teilen Wasser während 5 Minuten zwischengespült. Nach dem Abpumpen dieses Bades wird die Spule mit der oben beschriebenen Entwicklungsflotte 30 Minuten lang behandelt. Anschließend wird gespült und je 15 Minuten erst bei 60 °C, dann bei 100 °C wie üblich geseift. Nach dem Klarspülen und Trocknen erhält man eine volle Scharlachfärbung mit guten Echtheitseigenschaften.

Beispiel 2

a) 400 Teile 2-Nitro-anilin werden mit 300 Teilen N-Methyl-pyrrolidon und 300 Teilen eines Umsetzungsproduktes aus 1 Mol Ricinusöl und 45 Mol Ethylenoxid vermischt. Die entstehende gelbe Lösung zeigt eine Kristallisationstemperatur, die niedriger als − 10 °C liegt.

b) Diese erfindungsgemäße Präparation kann nach folgender Methode in einfacher Weise diazotiert werden :

100 Teile dieser Präparation werden in ein Gemisch aus 1 000 Teilen kaltem Wasser und 105 Teilen einer 32 %igen wäßrigen Salzsäure eingerührt. Zu der entstandenen Emulsion wird gleich nachfolgend rasch eine Lösung aus 22 Teilen Natriumnitrit in etwa 100 Teilen Wasser gegeben. Es entsteht eine leicht rötliche, klare Diazoniumsalzlösung.

Beispiel 3

a) 450 Teile 5-Nitro-2-methyl-anilin werden mit 450 Teilen n-Methyl-pyrrolidon und 100 Teilen eines Umsetzungsproduktes aus 1 Mol Ricinusöl und 42 Mol Ethylenoxid vermischt. Die entstehende gelbe Lösung hat eine Kristallisationstemperatur von − 20 °C. (Stellt man solch eine Präparation unter Verwendung der gleichen Menge von Methyldiglykol anstelle mit N-Methyl-pyrrolidon her, so zeigt diese Präparation eine Kristallisationstemperatur von + 62 °C.)

b) Die Diazotierung dieser erfindungsgemäßen Präparation kann nach folgender Methode in einfacher Weise erfolgen :

180 Teile dieser Präparation werden in ein Gemisch aus 2 400 Teilen Wasser von einer Temperatur von 15 bis 20 °C und 180 Teilen einer 32 %igen wäßrigen Salzsäure eingerührt. Sodann wird eine Lösung von 41 Teilen Natriumnitrit in etwa 80 Teilen Wasser unter Rühren rasch zugegeben. Die entstehende klare, rückstandsfreie Diazoniumsalzlösung ist sehr gut in der Eisfarbentechnik einsetzbar.

c) Zur Herstellung einer Scharlachfärbung auf Baumwollgewebe kann man wie folgt arbeiten :

20 Teile 2-Hydroxy-naphthalin-3-carbonsäure-2′-methoxyphenylamid werden in 100 Teilen Wasser von etwa 95 °C, das noch 27 Teile einer 33 %igen wäßrigen Natronlauge und 7 Teile eines handelsüblichen Fettsäure-Eiweißabbauprodukt-Kondensats enthält, eingetragen. Die entstehende Lösung wird nach dem Abkühlen auf etwa 60 °C mittels eines Foulards auf ein Gewebe aus Baumwolle geklotzt ; die Flottenaufnahme kann hierbei 70 % des Warengewichtes betragen. Anschließend wird die geklotzte Ware in üblicher Weise getrocknet und sodann mittels eines weiteren Foulards mit einer

Entwicklungsflotte überklotzt, die durch Vermischen von 200 Teilen der anfangs hergestellten Diazoniumsalzlösung, 6 Teilen Natriumacetat-trihydrat, 20 Teilen einer 60 %igen wäßrigen Essigsäure und 780 Teilen Wasser erhalten werden. Nach einem kurzen Luftgang der überklotzten Ware folgt eine Heißwasserpassage ; sodann wird sie auf einer Breitwaschanlage wie üblich gewaschen und anschließend getrocknet. Man erhält eine schöne Scharlachfärbung mit guten Echtheiten.

Beispiel 4

Gemäß den Angaben des Beispieles 3 stellt man erfindungsgemäße Präparationen folgender Zusammensetzungen her :

a) 450 Teile 5-Nitro-2-methyl-anilin, 150 Teile eines Umsetzungsproduktes aus 1 Mol Ricinusöl und etwa 40 Mol Ethylenoxid, 400 Teile N-Methyl-pyrrolidon ;

b) 400 Teile 5-Nitro-2-methyl-anilin, 200 Teile eines Umsetzungsproduktes aus 1 Mol Ricinusöl und etwa 40 Mol Ethylenoxid, 400 Teile N-Methyl-pyrrolidon ;

c) 333 Teile 5-Nitro-2-methyl-anilin, 333 Teile eines Umsetzungsproduktes aus 1 Mol Ricinusöl und etwa 40 Mol Ethylenoxid, 334 Teile N-Methyl-pyrrolidon.

Diese drei Präparationen haben gleich gute Eigenschaften wie die im Beispiel 3 beschriebene Präparation. Zur Herstellung von Diazoniumsalzlösungen, die für die Eisfarbentechnik gut geeignet sind, arbeitet man nach den Angaben des Beispieles 3, verwendet aber abweichend davon bei der unter b) beschriebenen Präparation 202 Teile dieser Präparation und bei der unter c) beschriebenen Präparation 243 Teile dieser Präparation. Man erhält jeweils klare, rückstandsfreie Diazoniumsalzlösungen, die in der Verfahrensweise des Beispieles 3c) einwandfreie Färbungen liefern.

Beispiel 5

700 Teile 2-Nitro-4-amino-1-ethoxy-benzol werden mit 180 Teilen N-Methyl-pyrrolidon und 120 Teilen eines Umsetzungsproduktes aus 1 Mol Ricinusöl und 35 Mol Ethylenoxid verrührt.

Die entstehende gelbe Lösung kann nach der folgenden Methode in einfacher Weise diazotiert werden :

100 Teile der Präparation werden in ein Gemisch aus 1 750 Teilen Wasser von etwa 20 °C und 130 Teilen einer 32 %igen wäßrigen Salzsäure eingerührt ; sodann wird eine Lösung von 29 Teilen Natriumnitrit in 44 Teilen Wasser Nachgesetzt. Man erhält eine klare, rückstandsfreie Diazoniumsalzlösung, die sich gut für die verwendung in der Eisfarbentechnik eignet.

Beispiel 6

600 Teile 2-Nitro-4-amino-1-ethyl-benzol werden mit 250 Teilen N-Methyl-pyrrolidon und 150 Teilen eines Umsetzungsproduktes aus 1 Mol Ricinusöl und 38 Mol Ethylenoxid verrührt. Die entstehende gelbe Lösung kann wie folgt diazotiert werden : In 1 500 Teile einer 2,7 %igen wäßrigen Salzsäure von etwa 20 °C werden zuerst 150 Teile der Präparation und anschließend 110 Teile einer 25 %igen wäßrigen Natriumnitritlösung eingerührt. Man erhält eine rückstandsfreie Diazoniumsalzlösung, die sich sehr gut zur Verwendung in der Eisfarbentechnik eignet.

Beispiel 7

300 Teile 3-Nitro-4-amino-1-ethyl-benzol, 500 Teile eines Umsetzungsproduktes von 1 Mol Ricinusöl mit 40 Mol Ethylenoxid und 200 Teile N-Methyl-pyrrolidon werden verrührt. Diese Lösung kann wie folgt diazotiert werden :

In 1 000 Teile einer 3,3 %igen wäßrigen Salzsäure von etwa 20 °C werden zuerst 100 Teile dieser Präparation und anschließend 70 Teile einer 20 %igen wäßrigen Natriumnitritlösung eingerührt. Man erhält ebenfalls eine rückstandsfreie Diazoniumsalzlösung, die sehr gut in die Eisfarbenfärberei eingesetzt werden kann.

Beispiel 8

500 Teile 2-Nitro-4-amino-1-methoxy-benzol werden mit 120 Teilen eines Umsetzungsproduktes von 1 Mol Ricinusöl mit 36 Mol Ethylenoxid und 380 Teilen N-Methylpyrrolidon verrührt. Die entstehende gelbe Lösung kann nach der in den vorstehenden Beispielen beschriebenen Arbeitsweise in eine für die Eisfarbentechnik geeignete Diazoniumsalzlösung übergeführt werden, wobei für 100 Teile dieser Präparation bevorzugt 1 500 Teile Wasser von etwa 20 °C, 100 Teile einer 32 %igen Salzsäure und 22 Teile Natriumnitrit, in wenig Wasser gelöst, verwendet werden können.

Beispiel 9

Man bereitet gemäß Beispiel 3 eine erfindungsgemäße Präparation, indem man anstelle des 5-Nitro-2-methyl-anilins die gleiche Menge an 3-Nitro-4-methyl-anilin einsetzt. Diese Präparation liefert gemäß den Angaben des Beispieles 3 gleichermaßen eine rückstandsfreie Diazoniumsalzlösung und sehr gute Färbungen in der Eisfarbentechnik.

Beispiel 10

350 Teile 2-Chlor-5-nitro-1-amino-benzol, 300 Teile eines Umsetzungsproduktes von 1 Mol Ricinusöl mit 35 Mol Ethylenoxid sowie 350 Teile N-Methyl-pyrrolidon werden miteinander verrührt. Die entstandene gelbe Lösung kann wie folgt in eine Diazoniumsalzlösung übergeführt werden, die für eine Verwendung in der Eisfarbentechnik, beispielsweise gemäß den Angaben des Beispieles 3c), gut geeignet ist : 1 000 Teile Wasser von etwa 15 °C werden mit 185 Teilen einer 20 %igen wäßrigen Salzsäure vermischt. Dann werden 22,5 Teile einer 40 %igen wäßrigen Natriumnitritlösung zugegeben und sogleich 100 Teile der hier in diesem Beispiel beschriebenen Präparation eingetragen.

**Ansprüche**

1. Flüssige Präparationen von Nitro-anilin-Verbindungen, gekennzeichnet durch einen Gehalt von
a) 20-70 Gew.-% einer Nitro-anilin-Verbindung, die keine Sulfonsäure- und/oder Carbonsäuregruppen enthält und die einen Schmelzpunkt von unterhalb 140 °C besitzt,
b) 5-80 Gew.-% eines oxethylierten Ricinusöls mit einem Gehalt von 25 bis 60 Mol Ethylenoxid und
c) 5-65 Gew.-% N-Methyl-pyrrolidon.

2. Präparationen nach Anspruch 1, dadurch gekennzeichnet, daß die Nitro-anilin-Verbindung ein unsubstituiertes Nitroanilin oder ein durch einen oder zwei Substituenten aus der Gruppe Halogen, Alkyl von 1 bis 4 C-Atomen, Alkoxy von 1 bis 4 C-Atomen und Trifluormethyl substituiertes Nitro-anilin ist.

3. Präparationen nach Anspruch 1, dadurch gekennzeichnet, daß die Nitro-anilin-Verbindung eine Verbindung der allgemeinen Formel

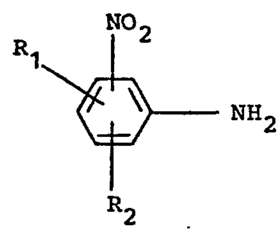

ist, in welcher $R_1$ ein Wasserstoffatom, ein Chlor- oder Fluoratom, eine Trifluormethyl-, eine Methyl-, Ethyl-, Methoxy- oder Ethoxygruppe bedeutet und $R_2$ für ein Wasserstoffatom, ein chloratom, eine Methyl- Ethyl-, Methoxy- oder Ethoxygruppe steht, wobei der Schmelzpunkt dieser Nitro-aniline unter 140 °C ist.

4. Präparationen nach Anspruch 1, dadurch gekennzeichnet, daß die Nitro-anilin-Verbindung das 2-Nitro-anilin oder 3-Nitro-anilin ist.

5. Präparationen nach Anspruch 1, dadurch gekennzeichnet, daß die Nitro-anilin-Verbindung das 5-Nitro-2-methoxy-anilin ist.

6. Präparationen nach Anspruch 1, dadurch gekennzeichnet, daß die Nitro-anilin-Verbindung das 5-Nitro-2-methyl-anilin ist.

7. Präparationen nach Anspruch 1, gekennzeichnet durch einen Gehalt von 30 bis 50 Gew.-% 3-Nitroanilin oder 5-Nitro-2-methyl-anilin oder 5-Nitro-2-methoxy-anilin, 5 bis 40 Gew.-% eines in Anspruch 1 genannten oxethylierten Ricinusöls und 30 bis 65 Gew.-% N-Methyl-pyrrolidon.

8. Verwendung der Präparationen von Anspruch 1 zur Herstellung von Entwicklungsflotten und -bädern für die Erzeugung von wasserunlöslichen Azofarbstoffen in der Eisfarbentechnik.

9. Verfahren zur Herstellung von Entwicklungsflotten und -bädern für die Erzeugung von wasserunlöslichen Azofarbstoffen auf der Faser nach den Methoden der Eisfarbentechnik, dadurch gekennzeichnet, daß man eine Präparation nach einem der Ansprüche 1 bis 7 mit wäßriger Salzsäure verrührt und eine wäßrige Lösung von Natriumnitrit zugibt.

**Claims**

1. Liquid compositions of nitro-aniline compounds characterized by a content of :
a) from 20 to 70 % by weight of a nitro-aniline compound containing no sulfonic acid and/or carboxylic acid groups and having a melting point of below 140 °C ;
b) from 5 to 80 % by weight of an oxethylated castor oil of from 25 to 60 mols of ethylene oxide and
c) from 5 to 65 % by weight of N-methyl-pyrrolidone.

2. Compositions according to Claim 1, characterized by that the nitro-aniline compound is an unsubstituted nitro-aniline or a nitro-aniline substituted by one or two substituents selected from the group of halogen, alkyl of 1 to 4 carbon atoms, alkoxy of 1 to 4 carbon atoms and trifluoromethyl.

3. Compositions according to Claim 1, characterized by that the nitro-aniline compound is a compound of the formula

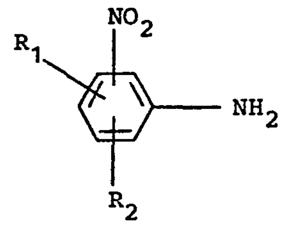

in which $R_1$ is a hydrogen atom, a chlorine or fluorine atom, a trifluoromethyl, methyl, ethyl, methoxy or ethoxy group, and $R_2$ is a hydrogen atom, a chlorine atom, a methyl, ethyl, methoxy or ethoxy group, the melting point of these nitro-anilines being below 140 °C.

4. Compositions according to Claim 1, characterized by that the nitro-aniline compound is 2-nitro-aniline or 3-nitro-aniline.

5. Compositions according to Claim 1, characterized by that the nitro-aniline compound is 5-nitro-2-methoxy-aniline.

6. Compositions according to Claim 1, characterized by that the nitro-aniline compound is 5-nitro-2-methyl-aniline.

7. Compositions according to Claim 1, characterized by a content of from 30 to 50 % by weight of 3-nitro-aniline or 5-nitro-2-methyl-aniline or 5-nitro-2-methoxy-aniline, of from 5 to 40 % by weight of an oxethylated castor oil mentioned in Claim 1, and of from 30 to 65 % by weight of N-methyl-pyrrolidone.

8. Use of the compositions of Claim 1 for the preparation of developing-liquors and -baths for producing water-insoluble azo dyestuffs in the ice-colour technique.

9. A process for the preparation of developing liquors and baths for producing water-insoluble azo dyestuffs on the fiber according to the methods of ice-colour technique, characterized by that a composition according to any of Claims 1 to 7 is stirred with aqueous hydrochloric acid, and an aqueous solution of sodium nitrite is added.

**Revendications**

1. Préparations liquides de nitro-anilines, caractérisées en ce qu'elles contiennent :

a) 20 à 70 % en poids d'une nitro-aniline qui ne porte pas de groupe sulfo et/ou pas de groupe carboxy et qui a un point de fusion inférieur à 140 °C,

b) 5 à 80 % en poids d'une huile de ricin oxyéthylée contenant 25 à 60 moles d'oxyde d'éthylène et

c) 5 à 65 % en poids de N-méthyl-pyrrolidone.

2. Préparations selon la revendication 1, caractérisées en ce que la nitro-aniline est une nitro-aniline non substituée ou une nitro-aniline portant un ou deux substituants choisis parmi les halogènes, les groupes alkyles en $C_1$ à $C_4$, les groupes alcoxy en $C_1$ à $C_4$ et le groupe trifluorométhyle.

3. Préparations suivant la revendication 1, caractérisées en ce que la nitro-aniline est un composé répondant à la formule générale

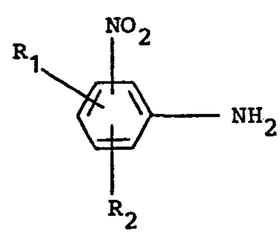

dans laquelle $R_1$ désigne un atome d'hydrogène, un atome de chlore ou de fluor, un groupe trifluorométhyle, méthyle, éthyle, méthoxy ou éthoxy, et $R^2$ désigne un atome d'hydrogène, un atome de chlore, un groupe méthyle, éthyle, méthoxy ou éthoxy, le point de fusion de ces nitro-anilines étant inférieur à 140 °C.

4. Préparations suivant la revendication 1, caractérisées en ce que la nitro-aniline est la nitro-2 aniline ou la nitro-3 aniline.

5. Préparations suivant la revendication 1, caractérisées en ce que la nitro-aniline est la nitro-5 méthoxy-2 aniline.

6. Préparations suivant la revendication 1, caractérisées en ce que la nitro-aniline est la nitro-5 méthyl-2 aniline.

7. Préparations suivant la revendication 1, caractérisées en ce qu'elles contiennent 30 à 50 % en poids de nitro-3 aniline, de nitro-5 méthyl-2 aniline ou de nitro-5 méthoxy-2 aniline, 5 à 40 % en poids de l'huile de ricin oxyéthylée indiquée dans la revendication 1 et 30 à 65 % en poids de N-méthyl-pyrrolidone.

8. Utilisation des préparations suivant la revendication 1 pour la préparation de bains et liqueurs de développement pour la production de colorants azoïques insolubles dans l'eau dans la technique des colorants à la glace.

9. Procédé de préparation de bains et liqueurs de développement pour la production de colorants azoïques insolubles dans l'eau sur la fibre par les procédés de la technique des colorants à la glace, procédé caractérisé en ce qu'on délaye une préparation selon l'une quelconque des revendications 1 à 7 avec de l'acide chlorhydrique aqueux et on ajoute une solution aqueuse de nitrite de sodium.